# EUROPEAN PATENT APPLICATION

(11) **EP 4 438 408 A1**
(43) Date of publication of application: **02.10.2024**
(21) Application number: 23165156.3
(22) Date of filing: 29.03.2023
(51) Int. Cl.: B60P 7/13

(54) **TWISTLOCK AND A METHOD FOR OPERATING A TWISTLOCK**

(71) Applicant: SH Group A/S, 5700 Svendborg (DK)
(72) Inventor: PRÆST, Lars, 5700 Svendborg (DK); NIKOLAJEVS, Andris, 5700 Svendborg (DK)
(74) Representative: Budde Schou A/S

(57) **Abstract**

Twistlock and a method for operating the twistlock, the twistlock comprises a housing (12), an elongated shaft element (149 and a top element (18) for interconnection with a part of an equipment module or cargo container, and wherein the shaft element and the top element are simultaneously rotatable and longitudinal displaceable in relation to the housing.

## Description

### TECHNICAL FIELD

The present invention relates to the field of mechanical interlocking of an object, such as the interlocking of a container module to a mounting surface.

Specifically, the invention relates to a twistlock and a method for operating the locking mechanism.

The twistlock of the present invention is particularly suitable to be used in combination with standard cargo containers or equipment modules having sizes corresponding to 20- or 40-foot cargo containers or corresponding to several interconnected cargo containers, which are to be connected to a mounting surface, such as a mounting surface on a sea vessel.

### BACKGROUND OF THE INVENTION

Within the technical field of container or equipment module shipping, or shipping in general, it is known to interconnect equipment modules or cargo containers to a mounting surface, such as the deck of a ship, a truck or freight train, by using manually operated standard twistlocks such as ISO twistlocks, suitable to be used with standard container corners, such as standard ISO 1161 container corners.

For the operation of interconnecting containers or equipment modules to a mounting surface, such as the deck of a ship, a truck or freight train etc., it is known that an operator needs to manually operate the lock into a locked position or vice versa. The operation is therefore time consuming, and entails a security risk for the operator, as the containers or modules are extremely heavy, and usually weigh several tons. Especially when arranging the modules or containers on cargo ships, which containers/modules are arranged in stacks closely positioned in relation to each other, it is difficult, dangerous, and cumbersome for an operator to manually lock/unlock the twistlocks. Further, in situations where the containers/modules are arranged in stacks against each other, it is not possible to gain access to all twistlocks by the operator, which twistlocks therefore cannot be locked. Hereby some containers/modules are not fully interconnected with the mounting surface.

Further, the container modules, when locked to the mounting surface are not completely fixed to the surface in a vertical plane, and known twistlocks do not draw the modules/containers towards a mounting surface.

Another example is disclosed in WO 2022/069087 A1, which describes a lift arrangement for lifting modules/containers onto a mounting surface of a ship. The document further discloses automated twistlocks which are vertically displaceable whereafter a top element is rotated in order to lock the module/container to the mounting surface.

Such known twistlock systems require several actuators/drive mechanisms, at least one actuator/drive mechanism for the vertical displacement, and at least one further actuator/drive mechanism for the rotation of the twistlock.

Arranging several actuators/drive mechanisms in relation to each twistlock has the disadvantage that the operation of the twistlock being rather complicated, as the movement of the individual actuators/drive mechanisms needs to be synchronized.

Further, several actuators/drive mechanisms in relation to each twistlock is space consuming, which is a disadvantage when several twistlocks need to be positioned close to each other. This is most often the case, as modules/containers are typically arranged in close proximity to each other on e.g., a deck of a ship, and therefore the installation, operation, maintenance, and exchange of individual twistlocks is problematic.

Therefore, a need exists for a more simply constructed twistlock which has all the necessary functions of a twistlock but operates in a more simple manner with the need of only one single actuator/drive means.

It is an object of the present invention to provide a twistlock and method for operating the twistlock which overcomes the above-described disadvantages.

The above object and advantages, together with numerous other objects and advantages, which will be evident from the following description of the present invention, are according to a first aspect of the present invention obtained by:
A twistlock suitable for the interconnection of an equipment module or cargo container to a mounting surface, the twistlock comprising a housing, an elongated shaft element, and a top element for interconnection with a part of the equipment module or cargo container, where the twistlock comprises displacing means such that the shaft element and the top element are simultaneously rotationally and longitudinally displaceable within the housing.

The twistlock is hereby suitable to be installed within limited space, removably or permanently into a mounting surface, such as the deck of a ship, a truck, or freight train etc. in which the locking mechanism can be in at least two positions, a first position where the top element is disengaged with a part of the equipment module or cargo container, and a second position, where the top element is engaged with a part of the equipment module or cargo container.

The twistlock may thus be installed in a mounting surface, such that the upper part of the twistlock can be arranged flush with the mounting surface such that the twistlock does not interfere with any objects thereon.

Preferably, the module/container comprises a part for connection at each corner, where the part(s) are preferably arranged as standard ISO container corners. Each module/container may comprise fewer or more of such connection parts, for interconnection with a corresponding number of twistlocks arranged in or on the mounting surface.

The twistlock may be used in a system comprising a number of twistlocks in a mounting surface, the number of twistlocks being arranged in a pattern called a footprint, where the number and position of the twistlocks corresponds to a number of connection part, such container corners, or one or more containers to be arranged on the mounting surface.

After the shaft element has been displaced such that at least part of the top element projects into engagement with the part of the module/container, the shaft element and the top element is rotatably arranged in the housing, such that the top element after rotation engages the part of the module/container for preventing movement of the module/container in a vertical direction. The rotational movement of the shaft element and the part of the top element is automatically performed by the single drive means which may be hydraulic, electrical, pneumatic or mechanical, where the drive means preferably operates in the longitudinal direction of the twistlock.

Once the top element has projected into the part of the module/container for connection, the module/container is prevented from unintentionally moving across the mounting surface.

The twistlock is preferably removably arranged in the mounting surface. The locking mechanism comprises a housing in which the elongated shaft element and top element is arranged longitudinally displaceable.

The housing may comprise means for connection to the mounting surface, such that the twistlock can be arranged within the mounting surface. The means for connection may comprise bolt fastening means or other suitable fastening means for releasably connecting the twistlock to the mounting surface.

The mounting means may comprise a mounting surface element, which is arranged as a plate-shaped element which can be removably incorporated into the mounting surface such that an upper part of the plate-shaped element forms part of the mounting surface. The plate-shaped element comprises an opening, and the twistlock can be connected to the lower surface of the plate-shaped element, such that at least the top element can extend through the opening, and into engagement with the part of the module/container.

The housing is preferably sealed and arranged as a fluid-tight housing, such that water, oil, moisture, dirt, etc. cannot enter the interior of the locking mechanism. Therefore, between the housing and the shaft element and/or the top element, there is arranged suitable sealing means, such as packing, e.g., rubber packings/O-rings, to prevent any intrusion of unwanted matter which could result in malfunctioning of the locking mechanism.

The twistlock comprises drive means for simultaneously performing a rotational and longitudinal displacement of the shaft element and the top element in relation to the housing, such that the top element can move between a position where the locking is disconnected from the module/container to a position where the locking mechanism is connected to the container. The drive means may be incorporated into the twistlock or arranged as an external drive mechanism which displaces and rotates the shaft element and top element.

Preferably, the drive means are incorporated into the housing and comprises a hydraulic piston, a screw thread mechanism or a rack and pinion mechanism which operates in the longitudinal direction of the twistlock, and thus in the longitudinal direction of the shaft element.

In a preferred embodiment, the top element is a cone-shaped top element suitable to interlock with a standard ISO container corner.

By actuation of the drive means, the top element rotates into engagement with the part of the module/container simultaneously with the longitudinal displacement of the shaft element and the top element.

The twistlock comprises a collar part, which when the elongated shaft element and/or top element has been displaced, interacts with an opening into the part of the module/container. Preferably the opening corresponds to a standard elongated opening in a standard ISO container corner.

Once the top element has been displaced into engage with the part of the module/container, the collar part projects into the opening and is hereby kept in a non-rotationally position in relation to the housing. Arranging the twistlock with such collar part provides a stabile position of the module/container in a horizontal direction.

The twistlock, when installed into the mounting surface either as an independent element, but preferable, as described above as part of a footprint comprising a number of twistlocks, is preferably connected to a control system for controlling all twistlocks either simultaneously and/or independent. The control system may, preferably via sensors operate the twistlocks and monitor the positioning and engagement with the equipment modules and containers during operation and/or overtime. Hereby any connection errors or unintentional movement of the modules/containers over time are determined and corrected.

According to a further embodiment of the first aspect of the invention, the displacing means are arranged such that the shaft element and the top element are non-rotational and longitudinal displaceable over a first distance in relation to the housing and simultaneously rotatable and longitudinal displaceable over a second distance in relation to the housing.

Arranging the displacing means, such that the shaft element and the top element are non-rotational and longitudinal displaceable over a first distance in relation to the housing and simultaneously rotatable and longitudinal displaceable over a second distance in relation to the housing has the advantage that the top element, before being rotated, can be displaced into engagement with the module/container before it is being rotated. The extend of the first distance is typically defined by the distance between the mounting surface and the interconnecting part of the module/container but may be arranged according to specific needs. The first and second distance may thus be arranged longer, such that the top of the twistlock may be displaced beyond the initial distance between the mounting surface and the interconnecting part of the module/container whereby the twistlock may have the function of a lift, before locking the module/container to the mounting surface.

After the top element has been displaced over the first distance, the twistlock is displaced in the same direction over a second distance while the top element is being simultaneously rotated. This is possible as the twistlock comprises the same single drive means performing the longitudinal displacement and the rotation.

The upper end of the shaft element may comprise an abutment element comprising an upper abutment surface suitable for abutting the underside of a part of the module/container and a collar for engaging with an opening of the module/container. During the displacement of the shaft end top element over at least the first and second distance, the twistlock via the abutment element with the abutment surface acts as a lifting mechanism, lifts the module/container above the mounting surface. Lifting the module/container above the mounting surface has the technical effect, when positioning the module/container by use of a loader/crane, which supports the module/container from underneath by lifting arms, the module/container can be supported in a lifted position by a number of twistlocks while the lifting arms are positioned or withdrawn from underneath the module/container.

According to a further embodiment of the first aspect of the invention, the longitudinal displacement over the first and second distance is in the same direction in relation to the housing, and wherein the shaft element and the top element are further longitudinal displaceable over a third distance, the longitudinal displacement over the third distance being opposite the longitudinal displacement over the first end second distance.

The twistlock is further arranged such that the shaft element and the top element are further longitudinal displaceable over a third distance, the longitudinal displacement over the third distance being opposite the longitudinal displacement over the first end second distance. Hereby after being inserted into the opening of a part of the module/container, such as the container corner, and rotated, the top element is moved towards the mounting surface and abuts inner surfaces of the module/container, which is hereby locked.

According to a further embodiment of the first aspect of the invention, where the displacing means are arranged such that the top element is rotatable simultaneously with the longitudinal movement over said third distance.

The top element is preferable rotatable simultaneously with the longitudinal displacement. Arranging the rotation of the top element simultaneously with the movement over the second and third distance, has the effect that the top element during movement over each distance, is only rotated part of the entire rotation, which decreases the force needed for creating the rotation.

According to a further embodiment of the first aspect of the invention, the displacing means are arranged such that the shaft element and the top element is non-rotational displaceable over a fourth distance in a direction opposite the first direction, such that an inner surface of the top element is suitable for abutting the equipment module or cargo container, and exerting a downward force thereon, for forcing the equipment module or cargo container against the mounting surface.

In order to safely secure the module/container to the mounting surface, the twistlock is arranged such that the shaft element and the top element is non-rotational displaceable over a fourth distance in the second direction, more specific a downwards movement of the shaft and the top element in relation to the mounting surface, when installed. The movement over the fourth distance ensures that the top element, which is engaged within the module/container, such as engaged within a container corner, forces the module/container against the mounting by a suitable force, e.g., depending on the weight of the module and the estimated movement of the vessel.

When transporting e.g., expensive or sensitive equipment on moving transport surfaces, such as the deck of a ship, it is extremely important that the module/container cannot move across the mounting surface such as the deck of a ship.

Especially where the module/container carries equipment for on-board use, such as radar systems, monitoring systems, or naval equipment such as launch systems or firing systems, the secure positioning of the module/container is of the utmost importance. Any slight movement of the module/container during operation of systems as defined above, results in either malfunction or the system functioning erroneously. Hereby, by the above defined features, any mounted container/module on the mounting surface being prevented form and movement once installed.

According to a further embodiment of the first aspect of the invention, where the displacing means comprises a groove pattern in said shaft element for engagement with a guide element on an inner surface of the housing, or the inner surface of the housing comprises a groove pattern for engagement with a guide element on the shaft element.

The displacing means is in a preferred embodiment arranged as a groove pattern extending over the surface of the shaft element, and a guide element fixedly connected to the housing and arranged projecting from the inner surface of the housing, such that the guide element engages the groove pattern. The housing may comprise one or more guide elements engaging the groove pattern. The housing is fixed in relation to the mounting surface, e.g., the deck of a ship, and as the shaft element is rotatably and displaceable connected within the housing, and the drive means are connected to the shaft element, the shaft element, when displaced by the drive means, is displaced by the engagement between the grooves and the guide elements, such that only one drive means are necessary.

In an alternative embodiment, the groove pattern is arranged on the inner surface of the housing, and the guide elements are arranged in the surface of the shaft element.

According to a further embodiment of the first aspect of the invention, the groove pattern comprises a groove extending in a longitudinal direction in relation to the shaft element and a groove extending in a circumferential direction in relation to the shaft element.

The groove pattern comprises a groove extending in a longitudinal direction in relation to the shaft element such that a displacement of the guide element(s) within the longitudinal extending grooves causes a non-rotational displacement of the shaft element within the housing. The groove pattern further comprises a groove extending in a circumferential direction in relation to the shaft element. The circumferential arranged groove is angled in relation to the longitudinal direction of the shaft element, such that it extends in both the circumferential and longitudinal direction, whereby a mutual displacement between the circumferential groove and the guide element causes both a rotation and a longitudinal displacement of the shaft element.

According to a further embodiment of the first aspect of the invention, the shaft element or the housing comprising a series of longitudinal and circumferential extending grooves.

The twistlock is preferably arranged with a series of grooves, comprising a number of longitudinal grooves and a number of circumferential grooves, whereby several different operations/movements can be associated with the groove pattern.

According to a further embodiment of the first aspect of the invention, the top element during the longitudinal displacement over the second and third distance being rotatable around approximately 90 degrees in relation to the longitudinal direction.

The top element needs to be rotated approximately 90 degrees, in order for the twistlock to change between an unlocked configuration where the module/container is unlocked from the twistlock and a locked configuration, where the module/container is locked to the twistlock.

The top element and the shaft element being both longitudinal and rotatable displaced over the second and third distances. The displacement over the second distance being performed by a downwardly (in relation to the upper end of the twistlock) and circumferentially extending groove which has an oblique angle in relation to the longitudinal direction. The drive means are displacing the shaft element upwards in relation to the housing, whereby the guide element(s) travel through the downward oblique groove whereby the shaft element and the top elements are both rotated and longitudinally displaced.

The displacement over the third distance being performed by an upward (in relation to the upper part of the twistlock) and circumferentially extending groove which has an oblique angle in relation to the longitudinal direction. The drive means are displacing the shaft element downwards in relation to the housing, whereby the guide element(s) travel through the upward oblique groove whereby the shaft element and the top elements are further rotated in the same direction and longitudinally displaced in a downwards direction.

By arranging two oblique arranged grooves, the top element may be rotated the necessary 90 degrees with an optimized ratio between the force needed for the longitudinal displacement and the force needed for rotational displacement.

According to a further embodiment of the first aspect of the invention, the top element during the longitudinal displacement over the second distance being rotatable around a part of approximately 90 degrees in relation to the longitudinal direction and rotational over the remaining part of the approximately 90 degrees during the longitudinal displacement over the third distance.

The inclination of the upwardly and downwardly extending grooves may be different, or the extend of the grooves in the circumferential direction may be different, however, the rotational displacement of the top element over the first distance is part of 90 degrees, and the displacement of the top element over the third distance is approximately the remaining part of 90 degrees whereby it is ensured that the top element, in total being rotated 90 degrees.

According to a further embodiment of the first aspect of the invention, the groove pattern comprises a continuous groove extending around the entire circumference of the shaft element or the inner surface of the housing such that the top element may be rotated in the same direction endlessly.

Arranging the twistlock with a groove pattern, continuously extending around the shaft element, the shaft element and top element may by longitudinal displace and endlessly rotated in the same direction, and groove spans the entire circumference of the shaft element.

According to a second aspect of the present invention, the above objects and advantages are obtained by:
A method of operating a twistlock, suitable for the interconnection of an equipment module or cargo container to a mounting surface, the twistlock comprising a housing, an elongated shaft element, and a top element for interconnection with a part of the equipment module or cargo container, wherein the shaft element and top element are rotationally and longitudinally displaceable within the housing, the method comprising the following steps:
- displacing the elongated shaft element and the top element in a first longitudinal direction of the shaft element over a first distance, such that the top element projects into the part of the container,
- displacing the elongated shaft element and the top element in the first longitudinal direction of the shaft element over a second distance and simultaneously rotating the top element around at least a part of approximately 90 degrees in relation to the longitudinal direction,
- displacing the elongated shaft element and the top element over a third distance in a second longitudinal direction being opposite the first longitudinal direction such that the top element locks the module or container to the mounting surface.

The above-defined method enables the twistlock to be operated by only on drive means and operated between a configuration where the twistlock is unlocked from the module/container and a configuration where the top element being rotated for locking the module/container to the twistlock.

According to a further embodiment of the second aspect of the invention, wherein during the step of displacing the shaft element over the second distance, the top element rotates a part of approximately 90 degrees in relation to the longitudinal direction, and during the step of displacing the shaft element over the third distance, the top element rotates the remaining part of the approximately 90 degrees.

The inclination of the upwardly and downwardly extending grooves may be different, or the extend of the grooves in the circumferential direction may be different, however, the rotational displacement of the top element over the first distance is part of 90 degrees, and the displacement of the top element over the third distance is approximately the remaining part of 90 degrees whereby it is ensured that the top element, in total being rotated 90 degrees.

According to a further embodiment of the second aspect of the invention, the method comprises the further following step, displacing the shaft element and the top element without rotation, in the second longitudinal direction over a fourth distance, such that the inner surface of the top element abuts the equipment module or cargo container, and exerts a downward force thereon, forcing the equipment module or cargo container against the mounting surface.

In order to safely secure the module/container to the mounting surface, the twistlock is arranged such that the shaft element and the top element is non-rotational displaceable over a fourth distance in the second direction, more specific a downwards movement of the shaft and the top element in relation to the mounting surface, when installed. The movement over the fourth distance ensures that the top element, which is engaged within the module/container, such as engaged within a container corner, forces the module/container against the mounting by a suitable force.

When transporting e.g., expensive or sensitive equipment or moving transport surfaces, such as the deck of a ship, it is extremely important that the module/container cannot move across the mounting surface such as the deck of a ship.

Where the module/container carries equipment for on-board use, such as radar systems, monitoring systems, or naval equipment such as launch systems or firing systems etc., the secure positioning of the module/container is of the utmost importance. Any slight movement of the module/container during operation of systems as defined above, results in either malfunction or the system functioning erroneously.

Hereby, by the above defined method, any mounted container/module on the mounting surface being prevented form and movement once installed.

According to a further embodiment of the second aspect of the invention, wherein the method further comprises:
- displacing the shaft element in the first direction over a fifth distance while simultaneously rotating the top element at least a part of approximately 90 degrees in relation to the longitudinal direction, and
- displacing the shaft element in the second direction over a sixth distance and said first distance in said second longitudinal direction, such that the top element is retracted out of the part of the container or the module.

The above-defined method enables the twistlock to be operated by only one drive means and operated between a configuration where the twistlock is locked to the module/container and a configuration where the top element being rotated for unlocking the module/container from the twistlock.

According to a further embodiment of the second aspect of the invention, wherein during the step of displacing the shaft element over the fifth distance, the top element rotates a part of approximately 90 degrees in relation to the longitudinal direction, and during the step of displacing the shaft element over the sixth distance, the top element rotates the remaining part of the approximately 90 degrees.

The inclination of the upwardly and downwardly extending grooves may vary, and/or the extend of the grooves in the circumferential direction may vary, however, the rotational displacement of the top element over the fifth distance is part of 90 degrees, and the displacement of the top element over the sixth distance is approximately the remaining part of 90 degrees whereby it is ensured that the top element, in total being rotated 90 degrees.

According to a further embodiment of the second aspect of the invention, the shaft element comprise an abutment element having an upper abutment surface, suitable for abutting against the underside of a part of the module/container, and wherein during the displacement of the shaft end top element over at least the first and second distance, the twistlock via the abutment element with the abutment surface acts as a lifting mechanism and lifts the module/container above the mounting surface.

Lifting the module/container above the mounting surface has the technical effect, when positioning the module/container by use of a loader/crane, which supports the module/container from underneath by lifting arms, the module/container can be supported in a lifted position by a number of twistlocks, while the lifting arms are positioned or withdrawn from underneath the module/container.

According to an alternative to the second aspect of the present invention, the above objects and advantages are obtained by:
A method suitable for operating a twistlock according to any of claims 1-11, wherein said method comprising the steps of:
- engaging an equipment module or cargo container to a mounting surface by said twistlock,
- locking said twistlock after engagement with said equipment module or cargo container,
- said twistlock exerting a downward force on said equipment module or cargo container, forcing said equipment module or cargo container against the mounting surface.

The twistlock which can be vertically displaced may be operated by the actuator providing the vertical displacement such that the twistlock is displaced in a direction against the support surface, such that the container/module is "pulled" against the support surface.

When transporting e.g., expensive or sensitive equipment on moving transport surfaces, such as the deck of a ship, it is extremely important that the module/container cannot move across the mounting surface such as the deck of a ship.

Especially where the module/container carries equipment for on-board use, such as radar systems, monitoring systems, or naval equipment such as launch systems or firing systems, the secure positioning of the module/container is of the utmost importance. Any slight movement of the module/container during operation of systems as defined above, results in either malfunction or the system functioning erroneously. Hereby, by the above-defined features, any mounted container/module on the mounting surface is being prevented from moving once installed.
Figs. 1A and 1B are first perspective views of the twistlock illustrated with and without a housing.
Figs. 2A and 2B are second perspective views of the twistlock illustrated with and without a housing.
Figs. 3A and 3B are third perspective views of the twistlock illustrated with and without a housing.
Figs. 4A and 4B are fourth perspective views of the twistlock illustrated with and without a housing.
Figs. 5A and 5B are fifth perspective views of the twistlock illustrated with and without a housing.
Fig. 6 is a cross-sectional view of the twistlock.

### Detailed description

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete and will fully convey the scope of the invention to those skilled in the art. Like reference numerals refer to like elements throughout. Like elements will thus not be described in detail with respect to the description of each figure.

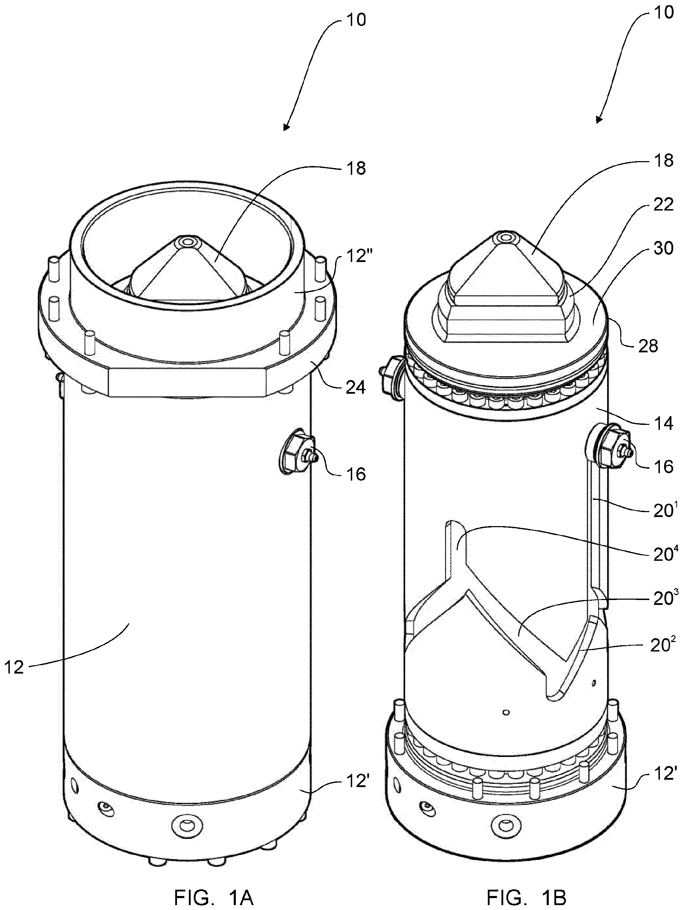

Figs. 1A and 1B are first perspective views of the twistlock 10 illustrated with and without a housing 12.

Fig. 1A is a view of the twistlock 10 with housing 12, where the twistlock being arranged in a fully retracted configuration. The twistlock 10 may be installed, removably or permanently into a mounting surface, such as the deck of a ship, a truck, or freight train etc. (not shown).

In a preferred embodiment, the twistlock is removably installed in a mounting surface such that a flange collar 12" arranged at an upper end of the housing is positioned within an opening in the mounting surface. In connection with the flange collar 12", the twistlock comprises a flange 24 suitable for connection, via mounting means such as bolts, welding, or other fastening means, to be connected to the mounting surface.

The illustrated embodiment is particularly suitable to be connected to a mounting surface from below but may in also be connected to the mounting surface from above.

The twistlock 10 further comprises a housing 12' bottom defining the lower end of the twistlock 10 and being removably connected to the housing via suitable fastening means, such as bolds, screws etc.

The upper end of the housing is open, defined by an upper edge of the housing collar 12".

The interior of the twistlock 10 comprises a shaft element 14 rotatable and slidably connected to the interior of the housing 12.

The upper end of the shaft element 14 comprises an abutment element 28 and a top element 18 having a conical shape but may alternatively have a different shape.

The top element 18 may correspond to a top element of a known type twistlock and projects into a part of the module/container (not shown) and interlocks therewith.

The abutment element 28 comprises an upper abutment surface 30 suitable for abutting the underside of a part of the module/container and a collar 22 for engaging with an opening of the module/container.

The conical-shaped top element 18 and the collar 22 are illustrated with an elongated form, such that the top element 18 and the collar 22 can protrude into a corresponding opening in a part of the module/container, such as an ISO container corner. The part of the module/container may be arranged differently from such ISO container corner. The top element 18 is in the shown embodiment interconnected with the shaft element 14 via a top element shaft (not shown) which extends rotatably through the collar 22 and the abutment element 28, such that rotation of the shaft element 14 causes a rotation of the top element 18.

The abutment element 28 and the collar 22 is thus rotatably arranged in relation to the top element 18 and the shaft element 14, but is preferably arranged with a releasable locking mechanism, such as a ball lock, in an interface between the abutment element 28 and the shaft element 14, for indexing the collar and the abutment element during engagement with the opening in said part of the equipment module or cargo container.

The shaft element 14 is at the lower end connected to drive means 26 such as preferably hydraulic drive means extending through the housing bottom 12'. The drive means 26 are not limited to hydraulic drive means but may be mechanical, pneumatic or any other drive means suitable for displacing the shaft element 14 in relation to the housing 12.

The surface of the shaft element 14 comprises a number of interconnected grooves 20¹-20⁶ and the housing 12 comprises a number of guide elements 16 for engaging with the number of grooves. The housing 12 is shown with two guide elements 16 but may alternatively be arranged with only one guide element 16 or more than two guide elements 16. The guide elements 16 are preferably arranged symmetrically or evenly distributed around the circumference of the housing 12. The guide elements are in a preferred embodiment, due to possible wear, arranged interchangeably with the housing 12.

The number of interconnected grooves 20¹-20⁶ comprises a number of grooves 20¹, 20⁴ arranged parallel with a longitudinal direction of the shaft element 14, and a number of grooves 20², 20³, 20⁵, 20⁶ arranged with an oblique angle in relation to the longitudinal direction of the shaft element 14. In the shown embodiment of the figures, the grooves 20¹-20⁶ are arranged as a series of interconnected grooves around the perimeter of the shaft element 14.

When the guide elements are positioned at an upper end of the first groove 20¹, the shaft element 14 is arranged in a fully retracted configuration and the top element 18 being arranged below the mounting surface.

When the guide elements 16 are positioned in the parallel grooves 20¹, 20⁴, the shaft element 14 and the top element 18 is by activation of the drive means 26 displaced within the housing 12 in the longitudinal direction of the twistlock 10 only. The shaft element 14 may thus be displaced in both longitudinal directions of the twistlock 10. When the guide elements 16 are positioned in the oblique grooves 20², 20³, 20⁵, 20⁶, the shaft element 14 and the top element 18 are by activation of the drive means 26 simultaneously rotational and longitudinal displaceable in relation to the housing 12.

In the shown embodiment, the grooves 20¹-20⁶ are arranged such that the shaft element 14 and the top element 18 rotates counter-clockwise in relation to the housing 12, when viewed from above, but may alternatively be arranged such that the shaft element 14 and the top element 18 move clockwise in relation to the bousing 12.

When the guide elements 16 travel downwards/upwards in the parallel 20¹, 20⁴, the shaft element 14 and the top element 18 move only in the first and second longitudinal direction of the twistlock 10.

When the guide elements 16 travel in the downward oblique grooves 20², 20⁵ the shaft element 14 and the top element 18 rotate counter-clockwise and move upwards in relation to the housing 12.

When the guide elements 16 travel in the upward oblique grooves 20³, 20⁶, the shaft element 14 and the top element 18 rotate counter clockwise and move downwards in relation to the housing 12.
w

The terms downward and upward should be understood in relation to the upper and lower end of the twistlock 10.

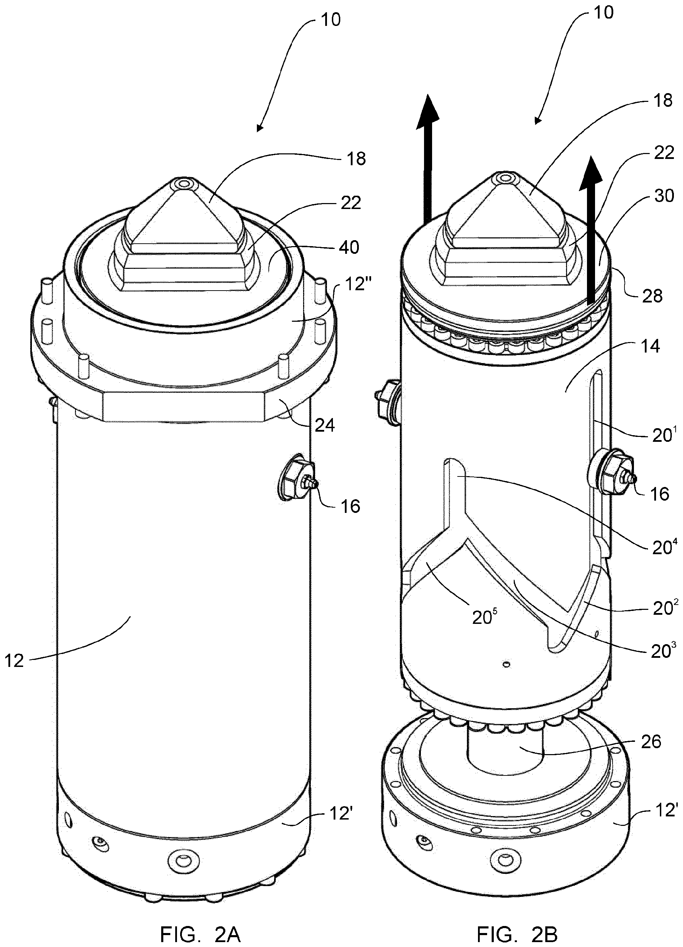

Figs. 2A and 2B are second perspective views of the twistlock 10 illustrated with and without the housing 12.

In the shown configuration, the drive means 26 has been activated causing the shaft element 14 to move upwards in relation to the housing 12. The guide elements 16 are positioned in the parallel grooves 20¹, whereby the shaft element 14 and the top element 18 can move upwards in relation to the housing 12 from a fully retracted configuration. The abutment surface is approximately flush with the mounting surface (not shown).

In case a module/container is already present on the mounting surface, the abutment surface 30 abuts the underside of the module container. The collar 22 and the top element 18 projects into a part of the module/container, such as a container corner, e.g., a standard ISO corner. The collar having an elongated shape, and being indexed with the housing, corresponds to the opening in the part of the module/container.

If the guide elements 16 travel downwards in the parallel groove 20¹ to the junction with the downward oblique groove 20², the abutment surface will be raised a predefined distance in relation to the mounting surface.

When using a lift arrangement as described in WO 2022/069087 A1, the beam elements supporting the module/container will be supporting the module/container by a certain distance above the mounting surface. By raising the abutment surface (and the top element 18) spanning at least this certain distance, the twistlock 10 engages the module/container which is still supported by the beam elements.

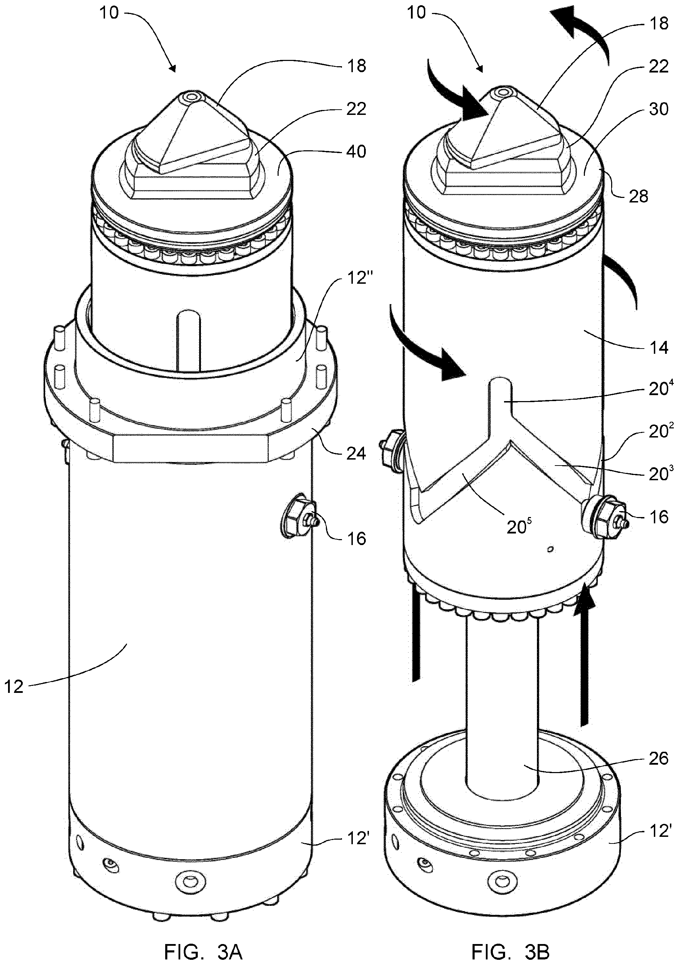

Figs. 3A and 3B are third perspective views of the twistlock 10 illustrated with and without the housing 12. In the shown configuration, compared to the configuration in figs. 2A and 2B, the drive means 26 has been further activated with an upwards force on the shaft element 14 hereby causing a further downward and angled displacement of the guide elements 16 within the grooves 20², in relation to the longitudinal direction.

The oblique arranged grooves 20² causes the shaft element 16, the abutment element 28, and the top element 18 to move upwards and simultaneously twist/rotate the shaft element 14 and the thereto connected top element 18. The degree of rotation depends on the extend of the oblique grooves 20². The longer the extend of the grooves, the large the angle of rotation. In the shown embodiment, the top element is rotated between 0 and 45 degrees approximately 20 degrees. It is, however, understood that the invention is not limited to a rotation of approximate 20 degrees. The invention likewise functions with any rotation between 0 and 45 degrees. In case the top element 18 is rotated approximate 45 degrees, the upwards oblique grooves 20³ are dispensable.

The module/container (not shown) arranged in connection with the twistlock 10 are further raised in relation to the mounting surface, whereby lifting beams, such as the ones described in WO 2022/069087 A1, can be retracted out from underneath the module/container which is now supported by the twistlocks 10 which are preferably arranged at least at each corner of the module/container. It is understood that the larger and/or heavier the module/container, the more twistlocks 10, which beside functioning as a twistlock 10 also functions as a lift, may be needed.

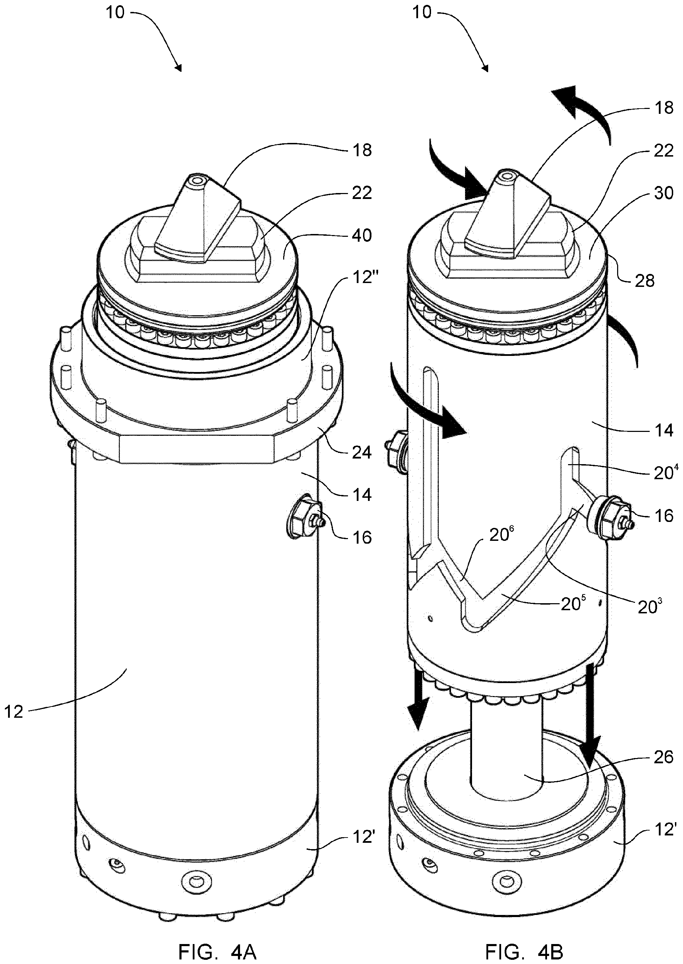

Figs. 4A and 4B are fourth perspective views of the twistlock 10 illustrated with and without the housing 12. In the shown configuration, compared to the configuration in figs. 3A and 3B, the drive means 26 has been operated in the opposite direction exercising a downwards force on the shaft element 14 hereby causing an upward and angled movement of the guide elements 16 within the oblique grooves 20³, such that the shaft element 14, the abutment element 28, and the top element 18 move downwards and the shaft element 14 and top element 18 rotate. In the shown embodiment, the shaft element 14 and top element 18 rotate the remaining part of 90 degrees compared to the configuration in figs. 3A and 3B when the guide elements 16 are positioned in the junction between grooves 20³ and 20⁴. The module/container is now in principle fully locked by the twistlock 10 and being lowered towards the mounting surface.

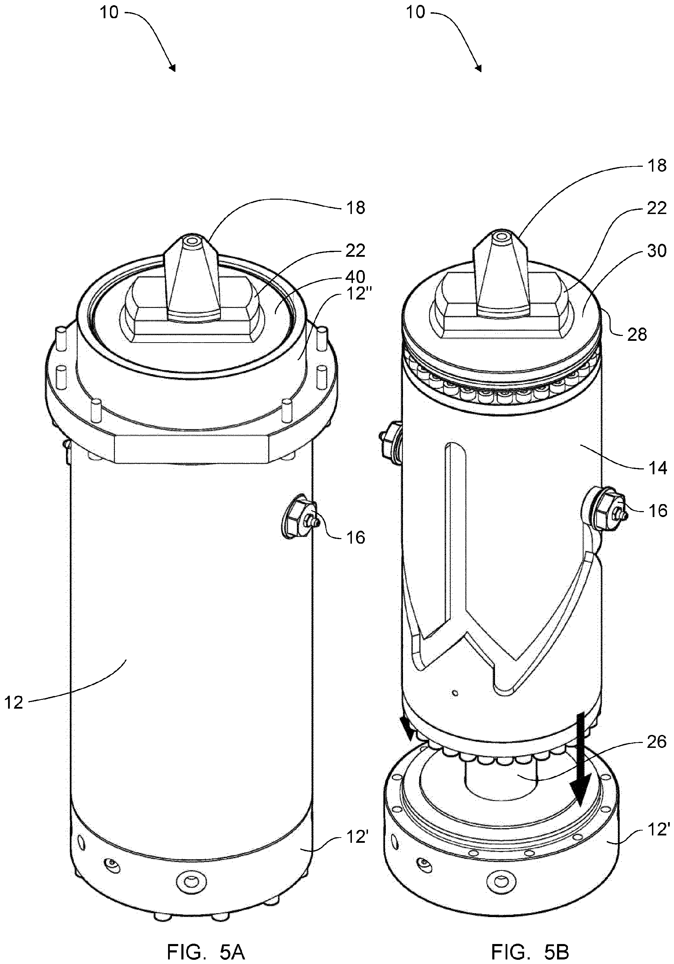

Figs. 5A and 5B are fifth perspective views of the twistlock 10 illustrated with and without a housing 12. Compared to the configuration in figs. 4A and 4B, the drive means 26 has been further activated with a downwards force on the shaft element 14, hereby causing a upward displacement of the guide elements 16 within the grooves 20⁴, in relation to the longitudinal direction, whereby the shaft element 14, the abutment element 28, and the top element 18 are further lowered without rotation in relation to the housing 12. The twistlock 10 in the shown configuration is thus in a position where the module/container is fully locked onto the mounting surface. The abutment surface in the shown configuration is slightly lowered in relation to the upper edge of the housing collar, the upper edge being intended to be mounted flush with the mounting surface. This exercises a drag on the module/container onto the mounting surface creating a constant force from the twistlock 10 on the module/container towards the mounting surface. Hereby the module/container is securely locked and forced onto the mounting surface. This force is dependent on the actuation of the drive means and may be adjusted accordingly.

If the drive means is again activated such that the shaft element, collar 28, and top element 18 are displaced upwards and afterwards downwards in relation to the housing 12, the guide elements 16 will travel through channels 20⁵. 20⁶ and 20¹, whereby the twistlock will assume the configuration shown in figures 1A and 1B. Here, the container can be removed from the mounting surface.

During this procedure, when the guide elements are at the junction between grooves 20⁵ and 20⁶, beam elements, such as the ones disclosed in WO 2022/069087 A1 may be inserted between the mounting surface and the module/container for supporting the container. The top element will during the rotation assume a position aligned with the opening into the module/container, such that the top element will be extracted out of the module/container, which then will be disengaged from the twistlock 10.

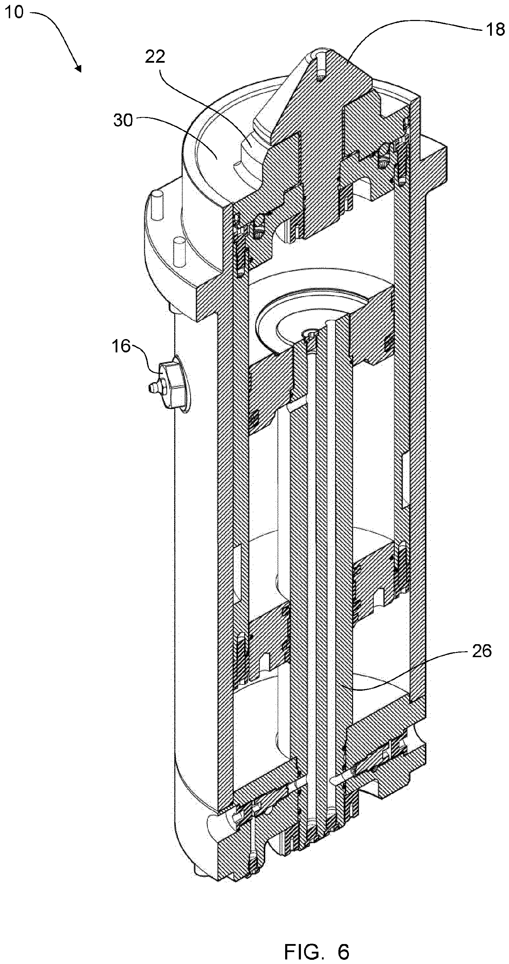

Fig. 6 is a cross-sectional view of the twistlock 10 illustrated in figures 1A-5B.

### List of reference numbers

- 10: Twistlock
- 12: Housing
- 12': Housing bottom
- 12": Housing collar
- 14: Shaft element
- 16: Guide element
- 18: Top element
- 20¹-20⁶: Groove
- 22: Collar
- 24: Flange
- 26: Drive means
- 28: Abutment element
- 30: Abutment surface
- 32: Releasable locking mechanism
- 34: Mounting surface element
- 36: Module/container part
- 36': Module part opening

## Claims

1. A twistlock (10) suitable for the interconnection of an equipment module or cargo container to a mounting surface, said twistlock (10) comprising a housing (12), an elongated shaft element (14), and a top element (18) for interconnection with a part (36) of said equipment module or cargo container, wherein said twistlock (10) comprises displacing means (20¹-20⁶) such that said shaft element (14) and said top element (18) are simultaneously rotationally and longitudinally displaceable within said housing (12).

2. A twistlock (10) according to claim 1, wherein said displacing means are arranged such that said shaft element and said top element are non-rotational and longitudinal displaceable over a first distance in relation to said housing and simultaneously rotatable and longitudinal displaceable over a second distance in relation to said housing.

3. A twistlock (10) according to claim 2, wherein said longitudinal displacement over said first and second distance is in the same first direction in relation to said housing, and wherein said shaft element and said top element are further longitudinal displaceable in a second direction and over a third distance, said longitudinal displacement over said third distance being opposite said longitudinal displacement over said first end second distance.

4. A twistlock according to claim 3, wherein said displacing means are arranged such that said top element is rotatable simultaneously with said longitudinal movement over said third distance.

5. A twistlock according to claim 4, wherein said displacing means are arranged such that said shaft element and said top element is non-rotational displaceable over a fourth distance in a direction opposite said first direction, such that an inner surface of said top element is suitable for abutting said equipment module or cargo container, and exerting a downward force thereon, for forcing said equipment module or cargo container against the mounting surface.

6. A twistlock according to any of the previous claims, wherein said displacing means comprises a groove pattern in said shaft element for engagement with a projecting element on an inner surface of said housing or said inner surface of said housing comprises a groove pattern for engagement with a projecting element on said shaft element.

7. A twistlock according to claim 6, wherein said groove pattern comprises a groove extending in a longitudinal direction in relation to said shaft element and a groove extending in a circumferential direction in relation to said shaft element.

8. A twistlock according to claims 6 or 7, wherein said shaft element or said housing comprising a series of longitudinal and circumferential extending grooves.

9. A twistlock according to any of claims 2-8, wherein said top element during said longitudinal displacement over said second and third distance being rotatable around approximately 90 degrees in relation to said longitudinal direction.

10. A twistlock according to any of claims 4-8, wherein said top element during said longitudinal displacement over said second distance being rotatable around a part of approximately 90 degrees in relation to said longitudinal direction and rotational over the remaining part of said approximately 90 degrees during said longitudinal displacement over said third distance.

11. A twistlock according to any of claims 6-10 wherein said groove pattern comprises a continuous groove extending around the entire circumference of said shaft element or said inner surface of said housing such that said top element may be rotated in the same direction endlessly.

12. A method of operating a twistlock, suitable for the interconnection of an equipment module or cargo container to a mounting surface, said twistlock (10) comprising a housing (12), an elongated shaft element (14), and a top element (18) for interconnection with a part (36) of said equipment module or cargo container, wherein said shaft element (14) and top element (18) are rotationally and longitudinally displaceable within said housing (12), said method comprising the following steps:
• displacing said elongated shaft element and said top element in a first longitudinal direction of said shaft element over a first distance, such that said top element projects into said part of said container,
• displacing said elongated shaft element and said top element in said first longitudinal direction of said shaft element over a second distance and simultaneously rotating said top element around at least a part of approximately 90 degrees in relation to said longitudinal direction,
• displacing said elongated shaft element and said top element over a third distance in a second longitudinal direction being opposite said first longitudinal direction such that said top element locks said module or container to said mounting surface.

13. A method according to claim 12, wherein during said step of displacing said shaft element over said second distance, said top element rotates a part of approximately 90 degrees in relation to said longitudinal direction, and during said step of displacing said shaft element over said third distance, said top element rotates the remaining part of said approximately 90 degrees.

14. A method according to claim 13, wherein said method comprises the further following step, displacing said shaft element and said top element without rotation, in said second longitudinal direction over a fourth distance, such that said inner surface of said top element abuts said equipment module or cargo container, and exerts a downward force thereon, forcing said equipment module or cargo container against the mounting surface.

15. A method according to claim 14, wherein said method further comprises:
• displacing said shaft element in said first direction over a fifth distance while simultaneously rotating said top element at least a part of approximately 90 degrees in relation to said longitudinal direction, and
• displacing said shaft element in said second direction over a sixth distance and said first distance in said second longitudinal direction, such that said top element is retracted out of said part of said container or said module.

16. A method according to claim 15, wherein during said step of displacing said shaft element over said fifth distance, said top element rotates a part of approximately 90 degrees in relation to said longitudinal direction, and during said step of displacing said shaft element over said sixth distance, said top element rotates the remaining part of said approximately 90 degrees.

17. A method according to any of claims 12-16, wherein said shaft element (14) comprise an abutment element (28) having an upper abutment surface (30), suitable for abutting against the underside of a part of the module/container, and wherein during said displacement of said shaft end top element over at least said first and second distance, said twistlock via said abutment element, with the abutment surface, acts as a lifting mechanism and lifts said module/container above said mounting surface.

18. A method suitable for operating a twistlock according to any of claims 3-11, wherein said method comprising the steps of:
• engaging an equipment module or cargo container to a mounting surface by said twistlock,
• locking said twistlock after engagement with said equipment module or cargo container,
• said twistlock exerting a downward force on said equipment module or cargo container, forcing said equipment module or cargo container against the mounting surface.
